(19) Europäisches Patentamt / European Patent Office / Office européen des brevets

(11) **EP 2 775 172 A1**

(12) **EUROPEAN PATENT APPLICATION**
published in accordance with Art. 153(4) EPC

(43) Date of publication:
**10.09.2014 Bulletin 2014/37**

(51) Int Cl.:
**F16H 48/08** (2006.01)

(21) Application number: **11852203.6**

(22) Date of filing: **04.11.2011**

(86) International application number:
**PCT/JP2011/075512**

(87) International publication number:
**WO 2013/065198 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **YOSHIMURA Takahiro Toyota-shi Aichi 471-8571 (JP)**

(74) Representative: **Albutt, Anthony John D Young & Co LLP 120 Holborn London EC1N 2DY (GB)**

(54) **VEHICLE DIFFERENTIAL DEVICE**

(57) It is an object to provide a vehicle differential gear reducing, as compared with the prior art, the magnitude of the inertial force of the drive shafts upon the hitting of the side gears on the differential case to thereby prevent the drive shafts from disengaging from the side gears.

The pair of belleville springs 64 and 66 have mutually different resilient characteristics, so that the pair of side gears 52 and 54 are prevented from colliding with the differential case 44 at the same time when the differential gear 30 is in differential rotation. In consequence, the force of collision of the side gear 52 with the differential case 44 acts on the washer 68, the differential case 44, the bearing 40, the shim 60, and the housing 38 so that the spring constant k' of the collided element B buffering the force of collision of the side gear 52 is smaller than the conventional spring constant k". For this reason, the peak value Fmaxl of the impact load upon the collision of the side gear 52 becomes smaller than the prior art, allowing the magnitude of the inertial force Fs1 of the drive shaft 321 upon the collision of the side gear 52 to become smaller than the prior art.

FIG.2

## Description

TECHNICAL FIELD

The present invention relates to a vehicle differential gear, and, more particularly, to a technique for preventing the disengagement of drive shafts disposed on the vehicle differential gear.

BACKGROUND ART

Some vehicle differential gears include, as depicted in Patent Documents 1 to 4 for example, a differential case supported rotatably around a predetermined first rotation axis via a support device within a housing so that the differential case is rotationally driven by a drive torque input from a drive source; a pair of side gears meshing with a pair of pinion gears housed in the differential case; and a pair of drive shafts fitted into the pair of side gears, respectively, such that the drive shafts cannot rotate relative to the side gears and such that the drive shafts are displaceable along an axis of the side gears. The vehicle differential gears of Patent Documents 1 and 2 are each provided with a pair of resilient members arranged in a preloaded state between a back surface of each of the side gears and an inner wall surface of the differential case so that the side gears are pressed toward the pinion gears by biasing forces of the pair of resilient members.

In the vehicle differential gears of Patent Documents 1 and 2, a backlash becomes substantially zero that is a clearance between outer circumferential teeth of the pinion gears and outer circumferential teeth of the side gears meshing with the outer circumferential teeth of the pinion gears, by virtue of the biasing forces of the pair of resilient members pressing the side gears toward the pinion gears. The vehicle differential gear has retaining rings attached thereto for preventing the drive shafts from disengaging from the side gears.

PRIOR ART DOCUMENTS

Patent Documents

Patent Document 1: Japanese Laid-Open Patent Publication No. 08-49758
Patent Document 2: Japanese Laid-Open Utility Model Publication No. 51-133925
Patent Document 3: Japanese Laid-Open Utility Model Publication No. 51-111631
Patent Document 4: Japanese Laid-Open Patent Publication No. 2003-130181

SUMMARY OF THE INVENTION

Problem to Be Solved by the Invention

Since the backlash becomes substantially zero by the biasing forces of the pair of resilient members in the vehicle differential gears of Patent Documents 1 and 2, the side gears are reciprocated in the axial direction of the side gears by an amount corresponding to the amount of variation in the backlash upon the differential rotation of the vehicle differential gears. Specifically, the side gears are forced out so as to come closer to the pinion gears by the biasing forces of the resilient members in a phase where the backlash is relatively large, while in a phase where the backlash becomes relatively small, the side gears are forced back so as to go away from the pinion gears against the biasing forces of the resilient members, with the result that the side gears reciprocate in the axial direction of the side gears. The side gears and the drive shafts are coupled together to transmit a torque therebetween, for example, such that spline teeth formed on an inner peripheral portion of a fitting aperture of each of the side gears fit into spline grooves formed on an outer periphery of a shaft end of each of the drive shafts. The presence of the retaining rings attached to the shaft ends of the drive shafts prevents the drive shafts from disengaging from the fitting aperture of the side gears so that the drives shafts reciprocate together with the side gears.

By the way, when the side gears and the drive shafts reciprocate together, the side gears may hit on the differential case. As a result, unlike the side gears that can hit on something like the differential case, the drive shafts that can hit on nothing are subjected to an inertial force in a direction where the drive shafts disengage from the side gears, and, when the magnitude of the inertial force exceeds e.g., a resultant force of a resisting force between the spline teeth of the side gears and the spline grooves of the drive shafts and a disengagement resisting load of the retaining rings, there is a possibility that the drive shafts may disengage from the side gears.

The present invention was conceived in view of the above circumstances and it is an object thereof to provide a vehicle differential gear reducing, as compared with the prior art, the magnitude of the inertial force of the drive shafts upon the hitting of the side gears on the differential case to thereby prevent the drive shafts from disengaging from the side gears.

Means for Solving the Problems

To achieve the object, the present invention provides a vehicle differential gear comprising (a) a differential case supported rotatably around a predetermined first rotation axis via a support device within a housing so that the differential case is rotationally driven by a drive torque input from a drive source; (b) a pair of side gears meshing with a pair of pinion gears housed in the differential case; (c) a pair of drive shafts fitted into the pair of side gears respectively, such that the drive shafts cannot rotate relative to the side gears and such that the drive shafts are displaceable along an axis of the side gears; (d) a retaining ring attached for preventing the drive shafts from disengaging from the side gears; (e) and a pair of resilient members each arranged in a preloaded state between a back surface of each of the side gears and an inner wall surface of the differential case, (f) the side gears being urged toward the pinion gears by biasing forces of the pair of resilient members, wherein (g) the pair of resilient members have mutually different resilient characteristics.

The Effects of thee Invention

According to the vehicle differential gear in the present invention, (g) the pair of resilient members have mutually different resilient characteristics. Therefore, since the pair of resilient members have mutually different resilient characteristics, the characteristics of displacement for the pair of resilient members between the back surfaces of the side gears and the inner wall surface of the differential case to input torques input from the drive source to the differential case differ each other, so that the pair of side gears are prevented from colliding with the differential case at the same time upon the differential rotation of the differential gear. In consequence, the force of collision of one of the pair of side gears with the differential case acts on the differential case, the support device, and the housing so that the spring constant of the member buffering the force of collision of the one of side gear with the differential case results in the spring constant obtained when coupling in series the differential case, the support device, and the housing, which is preferably smaller than the spring constant of the differential case. For this reason, the magnitude of the force upon the collision of the pair of side gears with the differential case becomes smaller than the prior art, allowing the magnitude of the inertial force of the drive shafts upon the collision of the side gears with the differential case to become smaller than the prior art. As a result of this, the magnitude of the inertial force of the drive shafts is reduced as compared with the prior art, thereby preventing the disengagement of the drive shafts from the side gears.

Preferably, the resilient characteristics of the pair of resilient members are such that effective operating ranges partly overlap along an axis of abscissas in a diagram having an axis of ordinates that represents magnitude of forces urging the side gears and the axis of abscissas that represents magnitude of input torques input from the drive source to the differential case. Since the resilient characteristics of the pair of resilient members are thus such that the effective operating ranges partly overlap along the axis of abscissas and that the remaining portions in the effective operating ranges do not overlap along the axis of abscissas as in the diagram having the axis of ordinates that represents magnitude of forces urging the side gears and the axis of abscissas that represents magnitude of input torques input from the drive source to the differential case, the characteristics of displacement for the pair of resilient members between the back surfaces of the side gears and the inner wall surface of the differential case to the input torques input from the drive force to the differential case differ each other, thereby preventing the pair of side gears from hitting on the differential case at the same time when the differential gear is in differential rotation.

Preferably, the resilient characteristics of the pair of resilient members are such that effective operating ranges do not overlap along an axis of abscissas in a diagram having an axis of ordinates that represents magnitude of forces urging the side gears and the axis of abscissas that represents magnitude of input torques input from the drive source to the differential case. Since the resilient characteristics of the pair of resilient members are thus such that the effective operating ranges do not overlap along the axis of abscissas as in the diagram having the axis of ordinates that represents magnitude of forces urging the side gears and the axis of abscissas that represents magnitude of input torques input from the drive source to the differential case, the characteristics of displacement for the pair of resilient members between the back surfaces of the side gears and the inner wall surface of the differential case to the input torques input from the drive source to the differential case differ each other, thereby properly preventing the pair of side gears from hitting on the differential case at the same time when the differential gear is in differential rotation.

Preferably, number of teeth of outer circumferential teeth of the pair of side gears is an odd number. Thus, when the differential gear is in the differential rotation, there occurs a phase difference between the upper backlash variation of one of the pair of side gears meshing with one of the pair of pinion gears and the lower backlash variation of the one of the pair of side gears meshing with other of the pair of pinion gears. For this reason, one of the side gears is tilted so that the upper side and the lower side of the one of the side gears cannot hit on the differential case at the same time, with the result that the negative acceleration is reduced that acts on one of the side gears and on the drive shafts displaced together therewith when the one of the side gears collides with the differential case. This advantageously reduces the magnitude of the inertial force that acts on the drive shafts upon the collision, thereby properly preventing the drive shafts from being disengaged from the side gears.

Preferably, number of teeth of outer circumferential teeth of the pair of pinion gears is an odd number. Thus, when the differential gear is in differential rotation, there occurs a phase difference between the upper and lower backlash variations of one of the pair of side gears meshing with the pair of pinion gears and the upper and lower backlash variations of other of the pair of side gears meshing with the pair of pinion gears. This prevents one of the side gears and other of the side gears from hitting on the differential case at the same time, so that the negative acceleration is reduced that acts on the side gears and on the drive shafts displaced together therewith when the side gears collide with the differential case. As a result of which the magnitude of the inertial force acting on the drive shafts is advantageously reduced upon the collision, thereby properly preventing the drive shafts from being disengaged from the side gears.

BRIEF DESCRIPTION OF THE DRAWINGS

Fig. 1 is a diagram for explaining a configuration of a drive force transmitting device having a vehicle differential gear (a rear-wheel differential gear) to which the present invention is applied.

Fig. 2 is a sectional view for explaining a configuration of the vehicle differential gear of Fig. 1.

Fig. 3 is a diagram depicting resilient characteristics of a pair of belleville springs disposed on the vehicle differential gear of Fig. 2, respectively.

Fig. 4 is a schematic diagram for explaining a state where the pair of side gears on one hand collides with the differential case when a pair of side gears and a pair of drive shafts reciprocate together upon the differential rotation of the vehicle differential gear of Fig. 2.

Fig. 5 is a schematic diagram for explaining a state where the pair of side gears collide with the differential case at the same time when the pair of side gears reciprocate together with the pair of drive shafts, and each of the pair of belleville springs disposed on the vehicle differential gear of Fig. 2 has the same resilient characteristics.

Fig. 6 is a diagram depicting the magnitude of a collision load generated when the side gears shown in Figs. 4 and 5 collide with the differential case.

Fig. 7 is a diagram depicting other resilient characteristics of the pair of belleville springs disposed on the vehicle differential gear of Fig. 2 and an example which the effective operation ranges partly overlap along the axis of abscissas.

Fig. 8 is a diagram depicting other resilient characteristics of the pair of belleville springs disposed on the vehicle differential gear of Fig. 2 and an example which the effective operation ranges do not overlap along the axis of abscissas.

Fig. 9 is a diagram depicting other resilient characteristics of the pair of belleville springs disposed on the vehicle differential gear of Fig. 2.

Fig. 10 is a diagram depicting an operation of the vehicle differential gear in another embodiment whose the pair of side gears with an odd number of teeth.

Fig. 11 is a schematic diagram for explaining a meshing state where the outer circumferential teeth of the pair of pinion gears mesh with the outer circumferential teeth of one of the pair of side gears in the vehicle differential gear of Fig. 10.

Fig. 12 is a diagram for explaining the magnitude of the upper backlash of one of side gears meshing with the pair of pinion gears and the magnitude of the lower backlash of the one of the side gears when the vehicle differential gear of Fig. 10 is in differential rotation.

Fig. 13 is a diagram for explaining the reciprocation distance of one of the pair of side gears when the vehicle differential gear of Fig. 10 is in differential rotation.

Fig. 14 is a schematic diagram depicting a meshing state where the outer circumferential teeth of the pair of pinion gears in the vehicle differential gear of Fig. 2 mesh with the outer circumferential teeth of one of the pair of side gears.

Fig. 15 is a diagram depicting the magnitude of the upper backlash of one of side gears meshing with the pair of pinion gears and the magnitude of the lower backlash of the one of the side gears when the vehicle differential gear of Fig. 2 is in differential rotation.

Fig. 16 is a diagram depicting the reciprocation distance of one of the pair of side gears when the vehicle differential gear of Fig. 2 is in differential rotation.

Fig. 17 is a simplified diagram depicting a vehicle differential gear in another embodiment whose the pair of pinion gears having an odd number of teeth.

Fig. 18 is a schematic diagram for explaining a meshing state where the outer circumferential teeth whose number of teeth is odd of the pair of pinion gears mesh with the outer circumferential teeth whose number of teeth is even of one of the pair of side gears in the vehicle differential gear of Fig. 17.

Fig. 19 is a schematic diagram for explaining a meshing state where the outer circumferential teeth whose number of teeth is odd of the pair of pinion gears mesh with the outer circumferential teeth whose number of teeth is even of other of the pair of side gears in the vehicle differential gear of Fig. 17.

Fig. 20 is a simplified diagram for explaining an operation of a vehicle differential gear in another embodiment having the pair of side gears mesh with the outer circumferential teeth of the pair of pinion gears disposed on the vehicle differential gear of Fig.2, whose outer circumferential teeth each have an odd number of teeth.

Fig. 21 is a schematic diagram for explaining a meshing state where the outer circumferential teeth of the pair of pinion gears mesh with the outer circumferential teeth of one of the pair of side gears in the vehicle differential gear of Fig. 20.

Fig. 22 is a schematic diagram for explaining a meshing state where the outer circumferential teeth of the pair of pinion gears mesh with the outer circumferential teeth of other of the pair of side gears in the vehicle differential gear of Fig. 20.

MODES FOR CARRYING OUT THE INVENTION

Embodiments of the present invention will now be described with reference to the drawings. It is to be noted in the following embodiments that the drawings are appropriately simplified or modified for ease of understanding and that the dimension ratios, shapes, etc., of portions are not necessarily precisely depicted.

First Embodiment

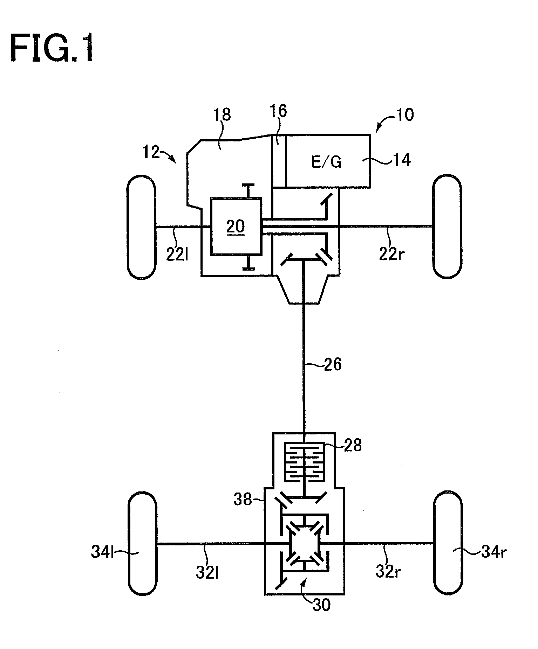

Fig. 1 is a schematic diagram for explaining a configuration of a drive force transmitting device 12 disposed on a front-rear wheel drive vehicle 10 basically employing a front-engine front-wheel drive (FF) to which the present invention is advantageously applied. The drive force transmitting device 12 depicted in Fig. 1 is configured such that a drive torque generated by an engine 14 acting as a drive source is transmitted via a torque converter 16, a transmission 18, a front-wheel differential gear 20, and a pair of front-wheel axles 22l and 22r to a pair of front wheels 24l and 24r while the drive torque is transmitted via a propeller shaft 26 acting as a drive torque transmitting shaft, an electronically controlled coupling 28 acting as a front-rear wheel power distribution device, a rear-wheel differential gear 30 (hereinafter, referred to simply as differential gear 30 (vehicle differential gear), and a pair of rear-wheel axles 32l and 32r (hereinafter, referred to as a pair of drive shafts 32l and 32r) to a pair of rear wheels 34l and 34r.

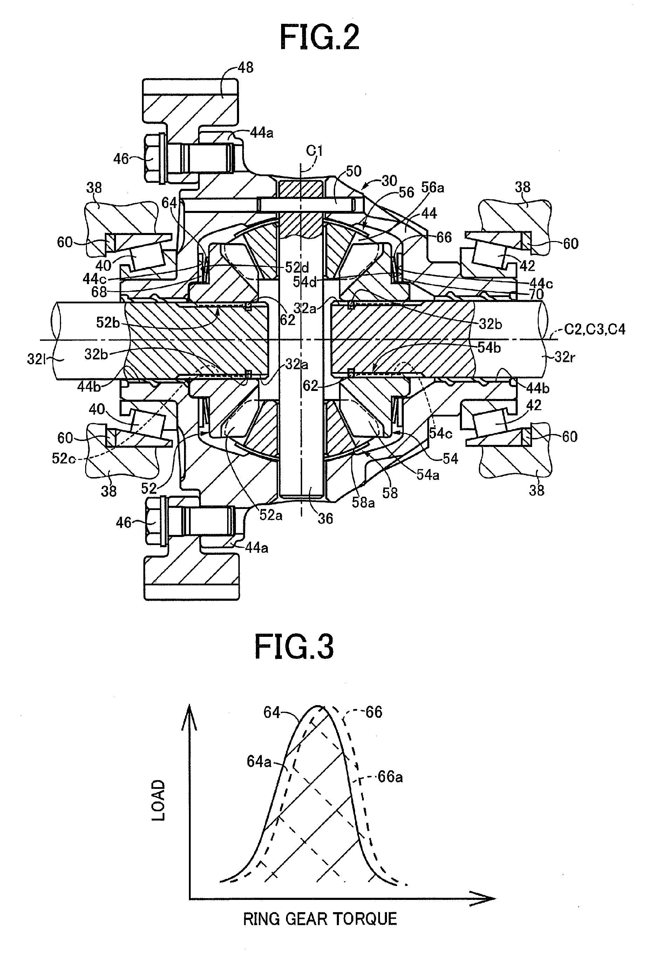

Fig. 2 is a sectional view taken along a plane containing an axis C1 of a pinion shaft 36 and an axis C2 of the pair of drive shafts 32l and 32r for depicting a configuration of the differential gear 30. As depicted in Fig. 2, the differential gear 30 includes a housing 38 that houses the differential gear 30; a differential case 44 rotatably supported, around a first rotation axis C3 substantially coaxial with the axis C2 of the pair of drive shafts 32l and 32r, via a pair of bearings (supporting devices) 40 and 42 within the housing 38; a ring gear 48 fixed by a bolt 46 to an outer periphery 44a of the differential case 44; the pinion shaft 36 of a cylindrical shape supported at its ends by the differential case 44, the pinion shaft 36 fixed by a dowel pin 50 to the differential case 44 with a posture orthogonal to the first rotation axis C3 of the differential case 44; a pair of side gears 52 and 54 housed in the differential case 44 and pivotally supported therein while confronting each other with the pinion shaft 36 interposed therebetween; and a pair of pinion gears 56 and 58 pivotally supported by the pinion shaft 36 extending therethrough, the pair of pinion gears 56 and 58 having outer circumferential teeth 56a and 58a that mate with outer circumferential teeth 52a and 54a of the pair of side gears 52 and 54. A pair of annular shims 60 intervene between the pair of bearings 40 and 42 and the housing 38, respectively. The outer circumferential teeth 52a and 54a of the pair of side gears 52 and 54 each have an even number of teeth. The outer circumferential teeth 56a and 58a of the pair of pinion gears 56 and 58 each have an even number of teeth.

As depicted in Fig. 2, the differential case 44 is provided with a pair of through holes 44b formed for receiving the pair of drive shafts 32l and 32r. Spline grooves 32a are formed on outer peripheries of shaft ends of the drive shafts 32l and 32r closer to the pinion shaft 36. Inner peripheral portions of fitting apertures 52b and 54b of the pair of side gears 52 and 54 are respectively formed with spline teeth 52c and 54c mating with the spline grooves 32a of the drive shafts 32l and 32r.

The pair of drive shafts 32l and 32r are respectively inserted and fit into the pair of through holes 44b of the differential case 44 such that the spline grooves 32a of the drive shafts 32l and 32r mutually engage with the spline teeth 52c and 54c of the pair of side gears 52 and 54. As a result, the pair of drive shafts 32l and 32r respectively fit into the fitting apertures 52b and 54b of the pair of side gears 52 and 54 in such a manner as to be unrotatable relative to the side gears 52 and 54 and displaceable along an axis C4 of the side gears 52 and 54. The axis C2 of the drive shafts 32l and 32r is substantially coaxial with the axis C4 of the side gears 52 and 54.

As depicted in Fig. 2, an annular groove 32b for receiving a snap ring (retaining ring) 62 is disposed on part of the outer periphery forming the spline groove 32a of each of the drive shafts 32l and 32r so that the snap ring 62 fits into the annular groove 32b. This allows the snap ring 62 mounted on the drive shafts 32l and 32r to abut against the spline teeth 52c and 54c of the side gears 52 and 54 when the drive shafts 32l and 32r try to disengage from the side gears 52 and 54, thereby preventing the disengagement of the drive shafts 32l and 32r from the side gears 52 and 54.

As depicted in Fig. 2, a pair of belleville springs (resilient members) 64 and 66 intervene between back surfaces 52d and 54d of the pair of side gears 52 and 54 and an inner wall surface 44c of the differential case 44, respectively, such that the pair of belleville springs (disc springs) 64 and 66 are arranged in a preloaded state between the back surfaces 52d and 54d of the pair of side gears 52 and 54 and the inner wall surface 44c of the differential case 44, respectively, with the result that the side gears 52 and 54 are urged in a direction approaching the pinion gears 56 and 58 by the biasing forces of the pair of belleville springs 64 and 66. As depicted in Fig. 2, annular washers 68 and 70 are interposed between the belleville springs 64 and 66 and the inner wall surface 44c of the differential case 44, respectively.

Fig. 3 is a diagram depicting resilient characteristics of the pair of belleville springs 64 and 66 in two-dimensional coordinates having an axis of ordinates and an axis of abscissas, the axis of ordinates representing the magnitude of forces urging the side gears 52 and 54 by the biasing forces of the belleville springs 64 and 66, i.e., the magnitude of loads applied to the side gears 52 and 54 from the belleville springs 64 and 66 by the biasing forces of the belleville springs 64 and 66, the axis of abscissas representing the magnitude of ring gear torques that are input torques input from the engine 14 to the ring gear 48 of the differential case 44. As seen from Fig. 3, the pair of belleville springs 64 and 66 have mutually different resilient characteristics in which effective operating ranges 64a and 66a of the pair of belleville springs 64 and 66 partly overlap along the axis of abscissas. The effective operating ranges 64a and 66a mean operating ranges in which the belleville springs 64 and 66 generate effective biasing forces that bias the side gears 52 and 54 toward directions eliminating the backlash between the side gears 52 and 54 and the pinion gars 56 and 58.

According to the differential gear 30 configured as described above, upon the differential rotation of the differential gear 30 during the vehicle running, the differential case 44 is rotationally driven by a drive torque input from the engine 14 via the ring gear 48 so as to impart a rotation difference to the pair of rear wheels 341 and 34r depending on a resistance from the road surface of the pair of rear wheels 341 and 34r. The differential gear 30 has a differential limiting function for generating friction forces between the pair of side gears 52 and 54 and the differential case 44 by the biasing forces of the pair of belleville springs 64 and 66, to thereby limit the difference between the pair of rear wheels 341 and 34r.

In the differential gear 30, the side gears 52 and 54 are biased in directions approaching the pinion gears 56 and 58 by the biasing forces of the pair of belleville springs 64 and 66 so that the backlash becomes substantially zero that is a clearance between the outer circumferential teeth 52a and 54a of the side gears 52 and 54 and the outer circumferential teeth 56a and 58a of the pinion gears 56 and 58. Therefore, upon the differential rotation of the differential gear 30, the side gears 52 and 54 are reciprocated along the axis C4 of the side gears 52 and 54 by an amount corresponding to the amount of variation in the backlash. Upon the differential rotation of the differential gear 30, the drive shafts 321 and 32r are reciprocated together with the side gears 52 and 54 by the action of the snap ring 62 mounted on each of the drive shafts 321 and 32r.

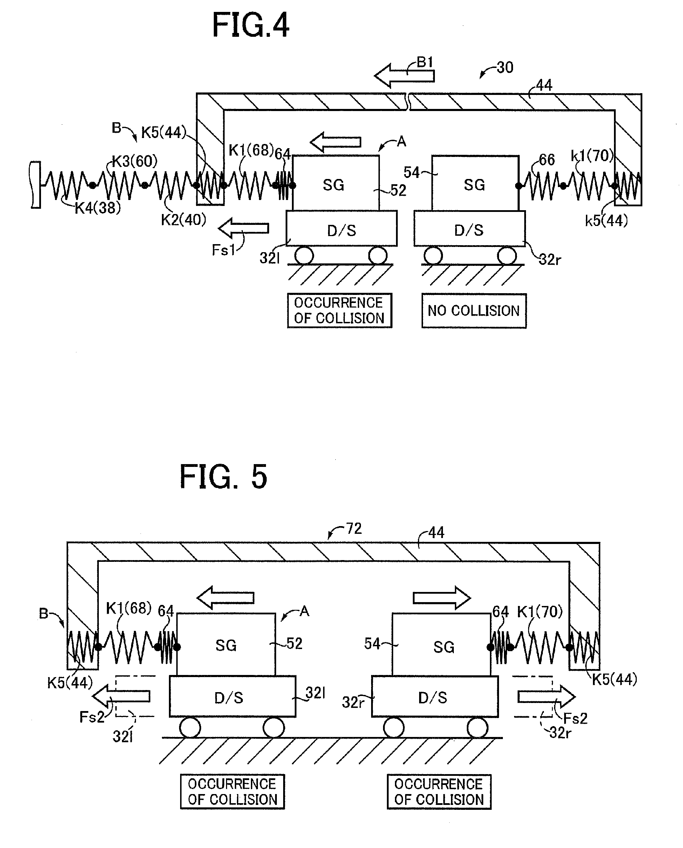

Fig. 4 is a diagram for explaining a state where only the side gear 52 on one hand collides with the differential case 44 when the side gears 52 and 54 and the drive shafts 321 and 32r reciprocate together. Since the pair of belleville springs 64 and 66 have mutually different resilient characteristics, the characteristics of displacement for the pair of belleville springs 64 and 66 between the back surfaces 54d and 56d of the side gears 52 and 54 and the inner wall surface 44c of the differential case 44 to ring torques input from the engine 14 to the differential case 44 differ each other. This prevents the pair of side gears 52 and 54 from colliding with the differential case 44 at the same time upon the differential rotation of the differential gear 30, as a result of which only the side gear 52 hits on the differential case 44 in Fig. 4.

Fig. 5 is a diagram depicting a state of a conventional differential gear 72 where the pair of side gears 52 and 54 collide with the differential case 44 at the same time when the side gears 52 and 54 reciprocate together with the drive shafts 321 and 32r. The conventional differential gear 72 depicted in this embodiment merely differs from the differential gear 30 in that the former uses a pair of belleville springs 64 each having the same resilient characteristics.

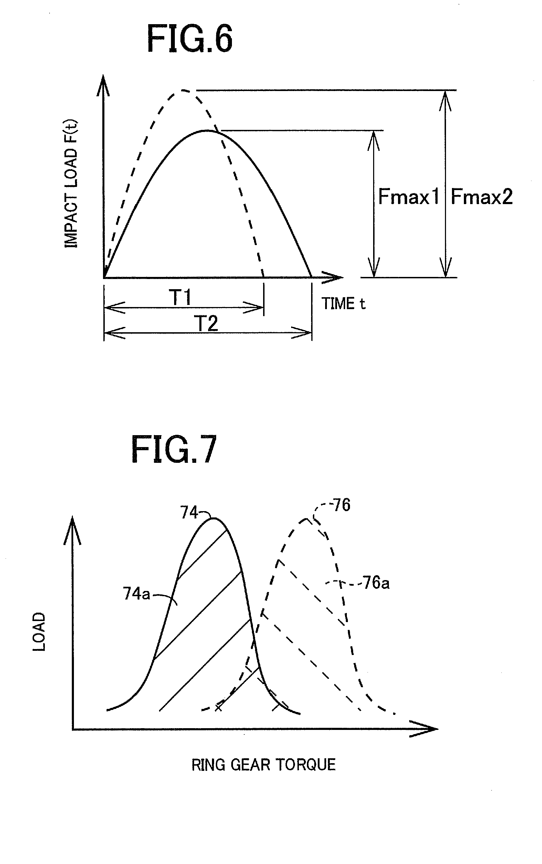

Fig. 6 depicts the magnitude of a collision load F generated when the side gear 52 collides with the differential case 44 for the duration from a collision starting point at which the side gear 52 comes into collision with the differential case 44 to a collision ending point at which the collision comes to an end. The magnitude of an impact load F from the side gear 52 upon the collision of only the side gear 52 with the differential case 44 indicated by a solid line of Fig. 6 is smaller than the magnitude of the impact load F from the side gear 52 upon the simultaneous collision of the pair of side gears 52 and 54 with the differential case 44 indicated by a broken line of Fig. 6. The reason will be described hereinbelow.

First, a peak value Fmax of the impact load F from the side gear 52 can be expressed by Equation (1) below.

$$\mathrm{Fmax} = \sqrt{k} * \sqrt{m} * v \; \dots \; (1)$$

where m is a mass of a colliding element A that is the sum of the side gear 52 and the drive shaft 321; k is a spring constant of a collision surface; and v is a collision velocity.

Thus, when only the side gear 52 collides with the differential case 44, a peak value Fmax1 of the collision load F from the side gear 52 can be figured out from Equation (2) below using Equation (1).

$$\mathrm{Fmax1} = \sqrt{k'} * \sqrt{m} * v \; \dots \; (2)$$

When the pair of side gears 52 and 54 collide with the differential case 44 at the same time, a peak value Fmax2 of the collision load F from the side gear 52 can be figured out from Equation (3) below using Equation (1).

$$\mathrm{Fmax2} = \sqrt{k''} * \sqrt{m} * v \; \dots \; (3)$$

The following is a description of the spring constants k' and k" of a collided element B in Figs. 4 and 5, i.e., the spring constants of the collision surface on which the impact load acts as a result of the collision when the side gear 52 collides with the differential case 44.

In Fig. 4, a collision with the differential case 44 of only the side gear 52 of the colliding element A displaces the differential case 44 in the direction indicated by an arrow B1 so that a force of the collision of the side gear 52 with the differential case 44 acts on the washer 68 which forms the collided element B, the differential case 44, the bearing 40, the shim 60, and the housing 38. Accordingly, in case of the collision of only the side gear 52 with the differential case 44, the spring constant k' of the collided element B buffering the force of collision of the side gear 52 with the differential case 44 is a spring constant obtained when coupling in series the washer 68, the differential case 44, the bearing 40, the shim 60, and the housing 38 if the belleville spring 64 is regarded as a rigid body upon the collision of the side gear 52 with the differential case 44. Therefore, the spring constant k' is represented as $1/(1/k1+1/k2+1/k3+l/k4+1/k5)$ where $k1$ is a spring constant of the washer 68; $k2$ is a spring constant of the bearing 40; $k3$ is a spring constant of the shim 60; $k4$ is a spring constant of the housing 38; and $k5$ is a spring constant of the differential case 44.

As depicted in Fig. 5, when the pair of side gears 52 and 54 collide with the differential case 44 at the same time, the forces of collision of the pair of side gears 52 and 54 are in balance in the differential case 44 as internal forces of the differential case 44. Accordingly, in case of the collision of the side gear 52 on one hand with the differential case 44, the spring constant k" of the collided element B buffering the force of collision of the side gear 52 with the differential case 44 is a spring constant obtained when coupling the washer 68 and differential case 44 in series if the belleville spring 64 is regarded as a rigid body upon the collision of the side gear 52 with the differential case 44. Therefore, the spring constant k" is represented as $1/(1/k1+1/k5)$.

From the above, the spring constant k' is smaller than the spring constant k". Hence, as depicted in Fig. 6, the peak value Fmax1 of the impact load F from the side gear 52 in case of Fig. 4 where only the side gear 52 collides with the differential case 44 becomes lower than the peak value Fmax2 of the impact load from the side gear 52 in case of Fig. 4 where the pair of side gears 52 and 54 collide with the differential case 44 at the same time. In consequence, when the differential gear 30 is in differential rotation, the magnitude of an inertial force Fs1 acting on the drive shaft 32l upon the collision of the side gear 52 with the differential case 44 is reduced as compared with the magnitude of an inertial force Fs2 acting on the drive shaft 32l of the conventional differential gear 72.

Since the differential gear 30 prevents the pair of side gears 52 and 54 from colliding with the differential case 44 at the same time by the pair of belleville springs 64 and 66, when the side gear 54 collides with the differential case 44, the magnitude of the peak value Fmax1 of the impact load F upon the collision of the side gear 54 with the differential case 44 is reduced as compared with the peak value Fmax2 of the conventional impact load F, similar to the case of the collision of the side gear 52 with the differential case 44, as a result of which the magnitude of the inertial force Fs1 acting on the drive shaft 32r upon the collision of the side gear 54 with the differential case 44 becomes smaller than the magnitude of the inertial force Fs2 acting on the drive shaft 32r of the conventional differential gear 72.

According to the differential gear 30 of this embodiment, the pair of belleville springs 64 and 66 have mutually different resilient characteristics, so that the pair of side gears 52 and 54 are prevented from colliding with the differential case 44 at the same time when it is in differential rotation. In consequence, the force of collision of the side gear 52 with the differential case 44 acts on the washer 68, the differential case 44, the bearing 40, the shim 60, and the housing 38 so that the spring constant k' of the collided element B buffering the force of collision of the side gear 52 with the differential case 44 results in the spring constant $(1/(1/k1+1/k2+1/k3+1/k4+1/k5))$ obtained when coupling in series the washer 68, the differential case 44, the bearing 40, the shim 60, and the housing 38, which is smaller than the spring constant k" $(1/(1/k1+1/k5))$ obtained when coupling the washer 68 and the differential case 44 in series in case of the simultaneous collision. For this reason, the magnitude of the peak value Fmax1 of the impact load F upon the collision of the side gears 52 and 54 with the differential case 44 becomes smaller than the peak value Fmax2 of the conventional impact load F, allowing the magnitude of the inertial force Fs1 of the drive shafts 32l and 32r upon the collision of the side gears 52 and 54 with the differential case 44 to become smaller than the inertial force Fs2 acting on the conventional drive shafts 32l and 32r. As a result of this, the magnitude of the inertial force Fs1 of the drive shafts 32l and 32r is reduced as compared with the inertial force Fs2 acting on the conventional drive shafts 32l and 32r, thereby preventing the disengagement of the drive shafts 32l and 32r from the side gears 52 and 54.

According to the differential gear 30 of this embodiment, the effective operating ranges 64a and 66a of the pair of belleville springs 64 and 66 partly overlap along the axis of abscissas in the two-dimensional coordinates shown in Fig. 3 having the axis of ordinates representing the magnitude of loads applied to the side gears 52 and 54 by the biasing forces of the belleville springs 64 and 66 and the axis of abscissas representing the magnitude of a ring gear torque input from the engine 14 via the ring gear 48 to the differential case 44. Since the resilient characteristics of the pair of belleville springs 64 and 66 are thus such that the effective operating ranges 64a and 66a partly overlap along the axis of abscissas and that the remaining portions thereof do not overlap as in Fig. 3, the characteristics of displacement between the back surfaces 52d and 54d of the side gears 52 and 54 and the inner wall surface 44c of the differential case 44 to the ring torques input from the engine 14 via the ring gear 48 to the differential case 44 differ each other, thereby preventing the pair of side gears 52 and 54 from hitting on the differential case 44 at the same time when the differential gear 30 is in differential rotation.

Second Embodiment

Another embodiment of the present invention will next be described. In the following description, portions common to the embodiments are designated by the same reference numerals and will not again be described.

The differential gear of this embodiment is substantially similar in configuration to the differential gear 30 of the first embodiment but differs therefrom in that the resilient characteristics of a pair of belleville springs 74 and 76 are different from the resilient characteristics of the pair of belleville springs 64 and 66 of the first embodiment.

Fig. 7 is a diagram depicting the resilient characteristics in the two-dimensional coordinates having the axis of ordinates and the axis of abscissas similar to Fig. 3 of the first embodiment. As can be seen from Fig. 7, the pair of belleville springs 74 and 76 have mutually different resilient characteristics, similarly to the first embodiment, in which along the axis of abscissas of Fig. 7 an overlapping portion of effective operating ranges 74a and 76a of the pair of belleville springs 74 and 76 is smaller than that of the pair of belleville springs 64 and 66 of the first embodiment. The differential gear of this embodiment has substantially the same effect as that of the differential gear 30 of the first embodiment.

Third Embodiment

The differential gear of this embodiment is substantially similar in configuration to the differential gear 30 of the first embodiment but differs therefrom in that the resilient characteristics of a pair of belleville springs 78 and 80 are different from the resilient characteristics of the pair of belleville springs 64 and 66 of the first embodiment.

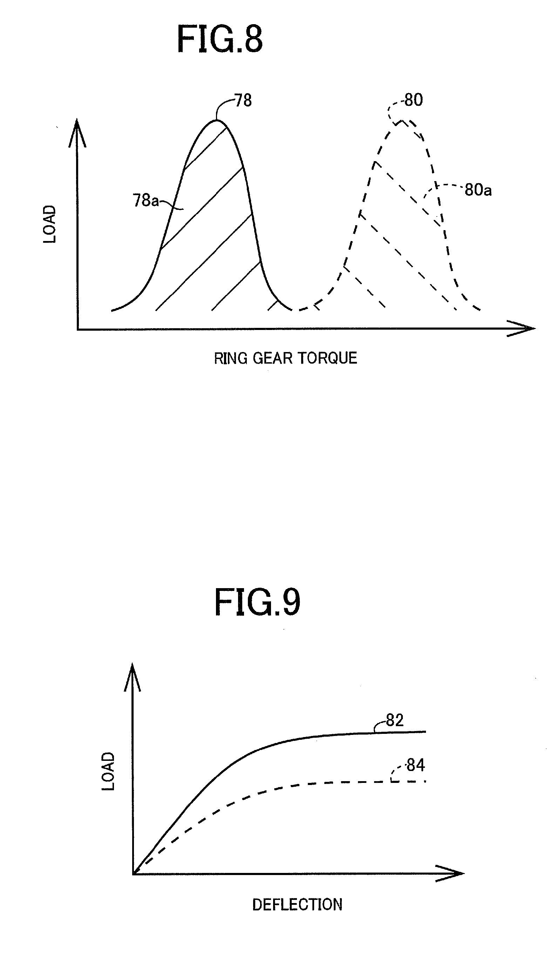

Fig. 8 is a diagram depicting the resilient characteristics in the two-dimensional coordinates having the axis of ordinates and the axis of abscissas similar to Fig. 3 of the first embodiment. As can be seen from Fig. 8, the pair of belleville springs 78 and 80 have mutually different resilient characteristics, dissimilarly to the first embodiment and the second embodiment, in which along the axis of abscissas of Fig. 8 no overlapping portion lies between effective operating ranges 78a and 80a of the pair of belleville springs 78 and 80.

According to the differential gear of this embodiment concerning resilient characteristics of the pair of belleville springs 78 and 80, the effective operating ranges 78a and 80a of the pair of belleville springs 78 and 80 do not overlap along the axis of abscissas in Fig. 8 depicting the two-dimensional coordinates having the axis of ordinates representing the magnitude of loads applied to the side gears 52 and 54 from the pair of belleville springs 78 and 80 by the biasing forces of the belleville springs 78 and 80 and the axis of abscissas representing the magnitude of a ring gear torque input from the engine 14 via the ring gear 48 to the differential case 44. Since the resilient characteristics of the pair of belleville springs 78 and 80 are thus such that the effective operating ranges 78a and 80a thereof do not overlap along the axis of abscissas as in Fig. 8, the characteristics of displacement for the pair of belleville springs 78 and 80 between the back surfaces 52d and 54d of the side gears 52 and 54 and the inner wall surface 44c of the differential case 44 to the ring gear torques input from the engine 14 via the ring gear 48 to the differential case 44 differ each other, thereby properly preventing the pair of side gears 52 and 54 from hitting on the differential case 44 at the same time when the differential gear is in differential rotation.

Fourth Embodiment

The differential gear of this embodiment is substantially similar in configuration to the differential gear 30 of the embodiments depicted in Figs. 3, 7, and 8 but differs therefrom in that the resilient characteristics of a pair of belleville springs 82 and 84 are such that the load increases according as the deflection increases to reach its saturation, as compared with the pair of belleville springs 64 and 66, 74 and 76, and 78 and 80.

Fig. 9 is a spring characteristic diagram of the pair of belleville springs 82 and 84 of this embodiment, depicted by two-dimensional coordinates having an axis of ordinates representing the magnitude of loads applied from the belleville springs 82 and 84 to the side gears 52 and 54 by biasing forces of the belleville springs 82 and 84 and an axis of abscissas representing the magnitude of deflections of the belleville springs 82 and 84. As can be seen from Fig. 9, the pair of belleville springs 82 and 84 have mutually different resilient characteristics so that the differential gear of this embodiment has substantially the same effect as that of the differential gear 30 of the first embodiment.

Fifth Embodiment

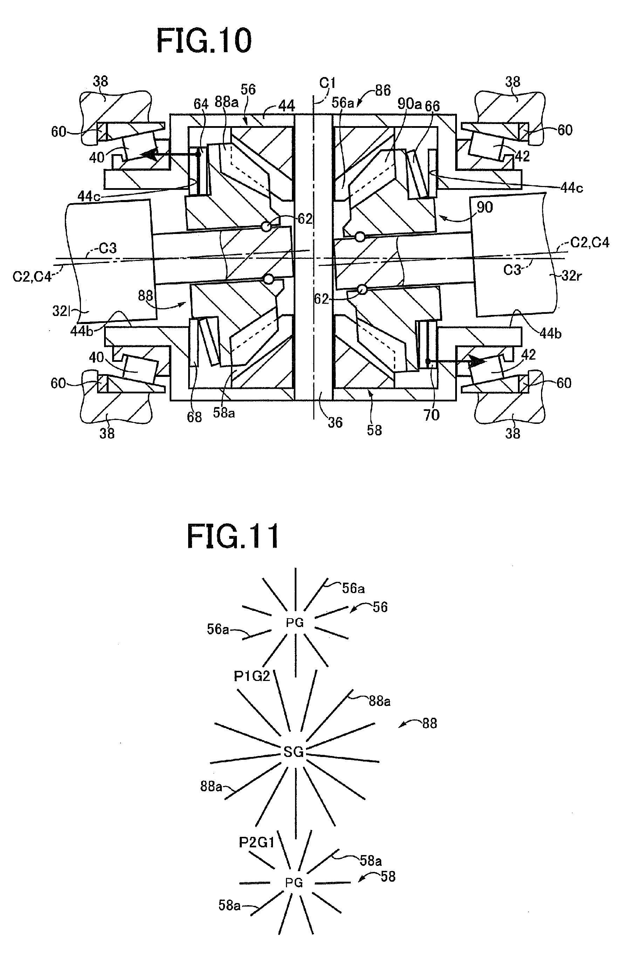

Referring to Figs. 10 to 13, a differential gear (a vehicle differential gear) 86 of this embodiment is substantially similar in configuration to the differential gear 30 of the first embodiment but differs therefrom in that it employs a pair of side gears 88 and 90 having outer circumferential teeth 88a and 90a whose number of teeth is odd in place of the pair of side gears 52 and 54 of the first embodiment, as compared with the differential gear 30 of the first embodiment. In Figs. 11 to 13 and Figs. 15 and 16 used in this embodiment, P1G2 designated in the diagrams represents a state where crests of the outer circumferential teeth 56a and 58a of the pinion gears 56 and 58 mate with roots of the outer circumferential teeth 52a and 88a of the side gears 52 and 88, and P2G1 represents a state where crests of the outer circumferential teeth 52a and 88a of the side gears 52 and 88 mate with roots of the outer circumferential teeth 56a and 58a of the pinion gears 56 and 58.

As depicted in Fig. 10, the pair of side gears 88 and 90 are pivotally supported while confronting each other with the pinion shaft 36 interposed therebetween such that the outer circumferential teeth 88a and 90a having an odd number of teeth of the pair of side gears 88 and 90 mesh with the outer circumferential teeth 56a and 58a having an even number of teeth of the pair of pinion gears 56 and 58.

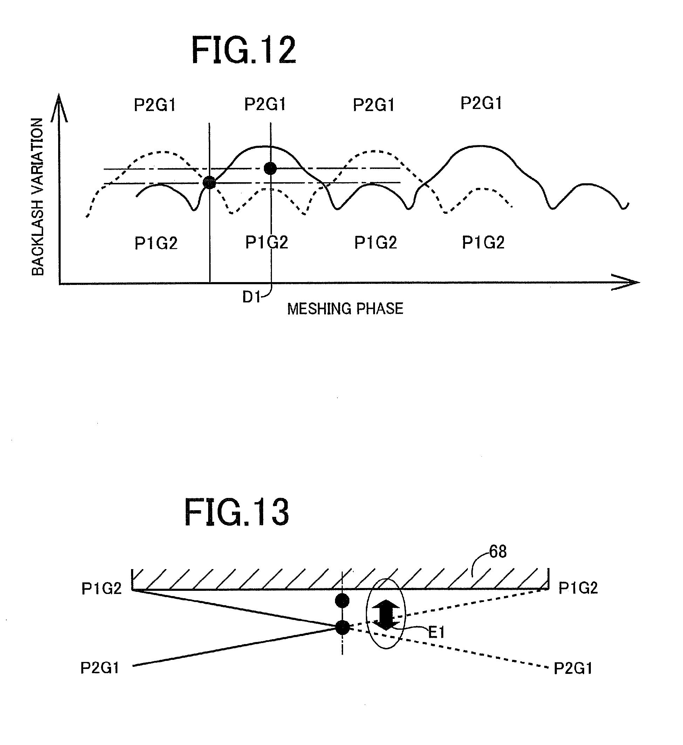

Fig. 11 depicts a state where the side gear 88 meshes with the pair of pinion gears 56 and 58. Fig. 12 is a diagram depicting the magnitude of the upper backlash of the side gear 88 meshing with the pinion gear 56 and the magnitude of the lower backlash of the side gear 88 meshing with the pinion gear 58 when the differential gear 86 is in differential rotation. A broken line of Fig. 12 shows the magnitude of the upper backlash of the side gear 88 meshing with the pinion gear 56. A solid line of Fig. 12 shows the magnitude of the lower backlash of the side gear 88 meshing with the pinion gear 58.

As can be seen from Figs. 11 and 12, when the differential gear 86 is in differential rotation, there occurs a phase difference between the upper backlash variation of the side gear 88 meshing with the pinion gear 56 and the lower backlash variation of the side gear 88 meshing with the pinion gear 58. For this reason, as depicted in Fig. 12, when the phase of meshing of the side gear 88 with the pair of pinion gears 56 and 58 is at D1, the upper backlash of the side gear 88 differs from the lower backlash of the side gear 88, allowing the side gear 88 and its axis C4 to be tilted relative to the first rotation axis C3 of the differential case 44 as seen in Fig. 10.

Accordingly, when the side gears 88 and 90 collide with the differential case 44, the upper side and the lower side of the side gears 88 and 90 are prevented from hitting on the differential case 44 at the same time, as depicted in Fig. 10. Thus, in the differential case 44, even if the side gears 88 and 90 collide with the differential case 44 as depicted in Fig 10, the forces of collision of the pair of side gears 88 and 90 act as a couple of forces of the differential case 44, to act on the bearings 40 and 42, the shim 60, and the housing 38, thereby reducing the spring constant of the collided element B as compared with the prior art. This results in a reduced negative acceleration acting on the side gears 88 and 90 and the drive shafts 32I and 32r displaced together therewith when the side gears 88 and 90 collide with the differential case 44.

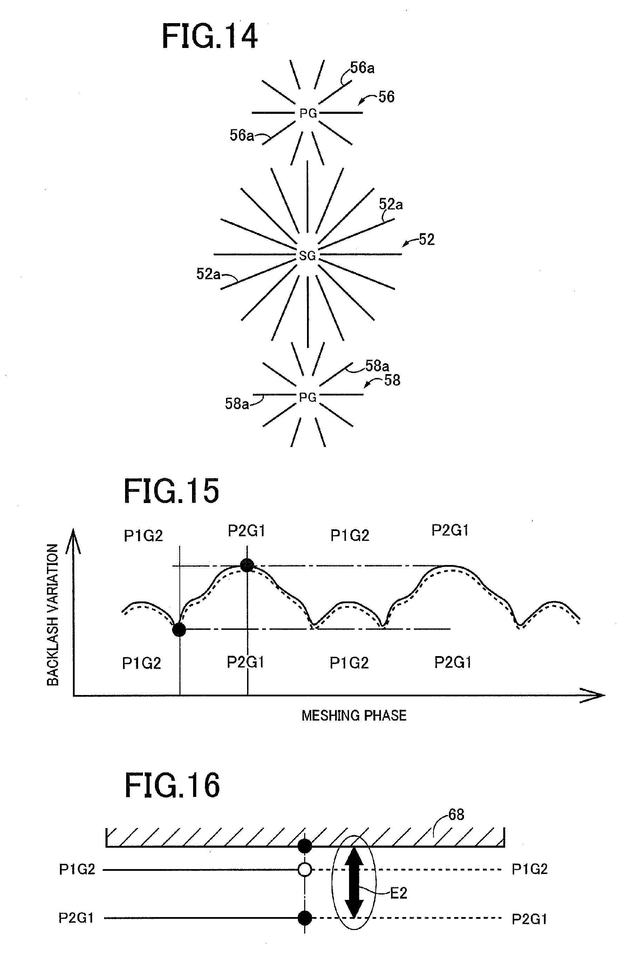

Fig. 13 is a diagram depicting a substantial displacement E1 of the side gear 88 with an odd number of teeth along the first rotation axis C3 of the differential case 44 when the differential gear 86 is in differential rotation. Fig. 16 is a diagram depicting a substantial displacement E2 of the side gear 52 with an even number of teeth along the first rotation axis C3 of the differential case 44 when the differential gear 30 is in differential rotation. According to Fig. 13, upon the differential rotation of the differential gear 86, there occurs a phase difference between the upper backlash variation of the side gear 88 meshing with the pinion gear 56 and the lower backlash variation of the side gear 88 meshing with the pinion gear 58. In case of using the side gear 52 with an even number of teeth, however, the upper backlash variation of the side gear 52 meshing with the pinion gear 56 is in phase with the lower backlash variation of the side gear 52 meshing with the pinion gear 58 when the differential gear 30 is in differential rotation, as seen in Figs. 14, 15 and 16. In this manner, use of the side gears 88 and 90 each having an odd number of teeth allows the displacement E1 of the side gear 88 along the first rotation axis C3 of the differential case 44 to become smaller than the displacement E2 of the side gear 52 of the first embodiment.

That is, as depicted in Fig. 15, upon the differential rotation of the differential gear 30, the side gear 52 with an even number of teeth has no phase difference between the upper backlash variation of the side gear 52 meshing with the pinion gear 56 and the lower backlash variation of the side gear 52 meshing with the pinion gear 58, with the result that the displacement E2 of the side gear 52 is a difference depicted in Fig. 15 between the minimum backlash of the side gear 52 and the maximum backlash of the side gear 52. As depicted in Fig. 12, however, in case of the side gear 88 having an odd number of teeth, when the phase of meshing of the side gear 88 with the pair of pinion gears 56 and 58 is at D1, the upper backlash of the side gear 88 is smaller than the lower backlash of the side gear 88 that is maximized at D1, as a result of which the side gear 88 is tilted so that the displacement E1 of the side gear 88 along the first rotation axis C3 of the differential case 44 becomes smaller than the displacement E2 of the side gear 52. In consequence, when the differential gear 30 and the differential gear 86 have the same number of differential rotations upon the differential rotation thereof, the displacement velocity of the side gears 88 and 90 along the first rotation axis C3 of the differential case 44 becomes smaller than that of the side gears 52 and 54 so that the negative acceleration is reduced that acts on the side gears 88 and 90 and on the drive shafts 32I and 32r displaced together therewith upon the collision of the side gears 88 and 90 with the differential case 44.

According to the differential gear 86 of this embodiment, the outer circumferential teeth 88a and 90a of the pair of side gears 88 and 90 each have an odd number of teeth, so that upon the differential rotation thereof there occurs a phase difference between the upper backlash variation of the side gear 88 meshing with the pinion gear 56 and the lower backlash variation of the side gear 88 meshing with the pinion gear 58. For this reason, the side gears 88 and 90 are tilted so that the upper side and the lower side of the side gears 88 and 90 cannot hit on the differential case 44 at the same time, with the result that the negative acceleration is reduced that acts on the side gears 88 and 90 and on the drive shafts 321 and 32r displaced together therewith when the side gears 88 and 90 collide with the differential case 44. This advantageously reduces the magnitude of the inertial force Fs1 that acts on the drive shafts 321 and 32r upon the collision, thereby properly preventing the drive shafts 321 and 32r from being disengaged from the side gears 88 and 90.

Sixth Embodiment

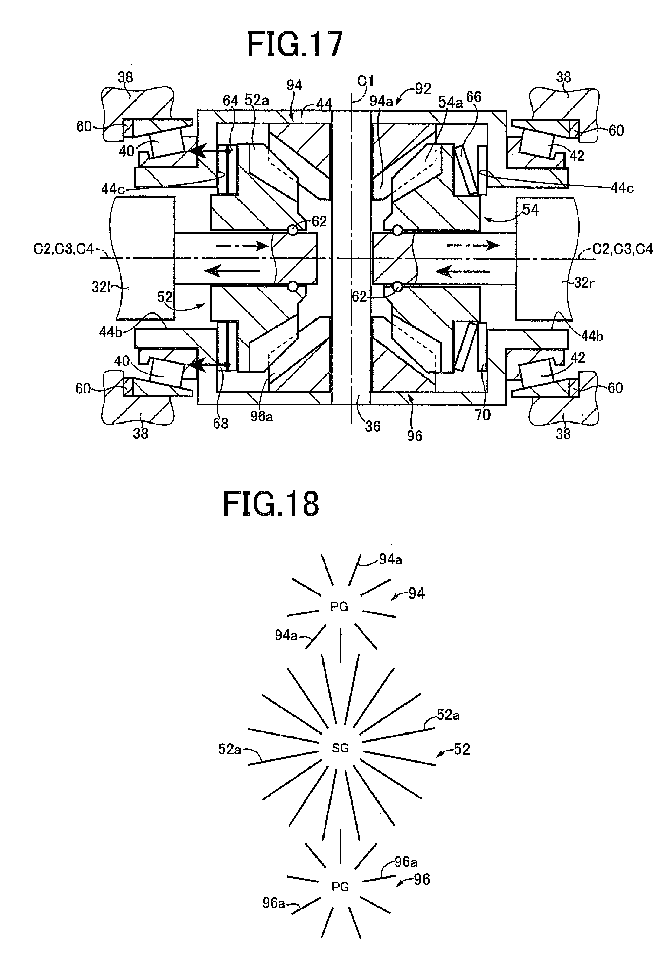

Referring to Figs. 17 to 19, a differential gear (a vehicle differential gear) 92 of this embodiment is substantially similar in configuration to the differential gear 30 of the first embodiment but differs therefrom in that it is provided with a pair of pinion gears 94 and 96 whose outer circumferential teeth 94a and 96a each have an odd number of teeth, instead of the pair of pinion gears 56 and 58 of the first embodiment.

As depicted in Fig. 18, the pair of pinion gears 94 and 96 allow the pinion shaft 36 to pass therethrough so that they are pivotally supported by the pinion shaft 36, with the outer circumferential teeth 94a and 96b whose number of teeth is odd of the pair of pinion gears 94 and 96 being meshed with the outer circumferential teeth 52a and 54a whose number of teeth is even of the pair of side gears 52 and 54.

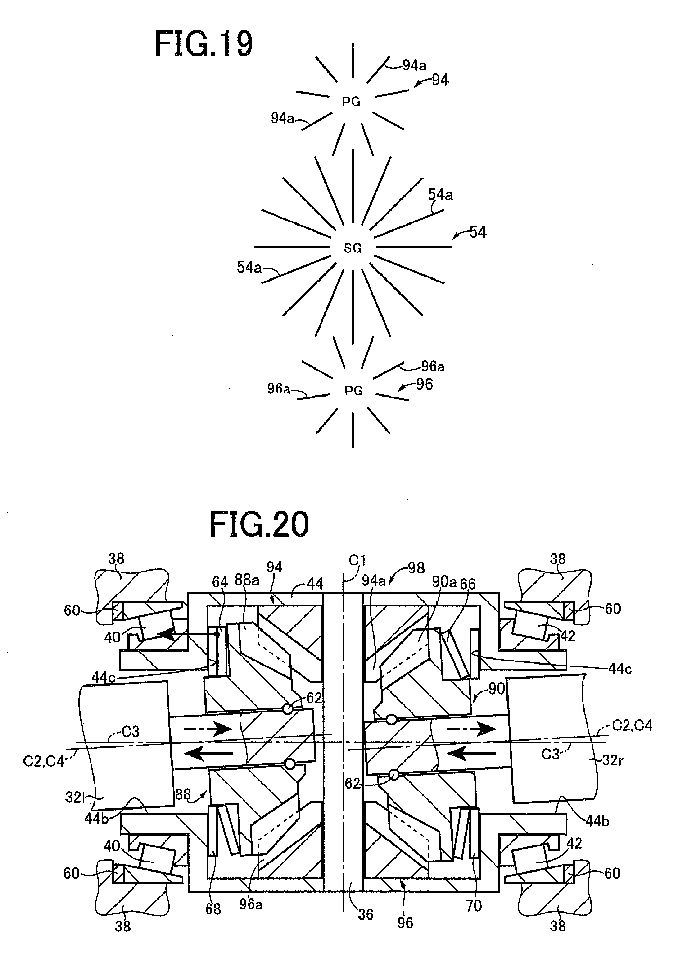

As can been seen from Figs. 18 and 19, when the differential gear 92 is in differential rotation, there occurs a phase difference between the backlash variation of the side gear 52 on one hand meshing with the pair of pinion gears 94 and 96 and the backlash variation of the side gear 54 on the other meshing therewith, thus allowing the reciprocation of the pair of side gears 52 and 54 in the same direction as depicted in Fig. 17. Accordingly, the side gear 52 and the side gear 54 cannot collide with the differential case 44 at the same time, so that the forces of collision of the pair of side gears 52 and 54 with the differential case 44 are applied to the washers 68 and 70, the differential case 44, the bearings 40 and 42, the shim 60, and the housing 38 as depicted in Fig. 17, thereby reducing the spring constant of the collided element B as compared with the prior art, which results in a reduced negative acceleration acting on the side gears 52 and 54 and the drive shafts 321 and 32r displaced together therewith when the side gears 52 and 54 collide with the differential case 44. In the side gears 52 and 54 meshing with the pair of pinion gears 94 and 96, the variation of the backlash above the rotation axis C3 or C4 is in phase with the variation of the backlash below the same.

According to the differential gear 92 of this embodiment, the outer circumferential teeth 94a and 96a of the pair of pinion gears 94 and 96 each have an odd number of teeth. Thus, when the differential gear 92 is in differential rotation, there occurs a phase difference between the backlash variation of the side gear 52 meshing with the pair of pinion gears 94 and 96 and the backlash variation of the side gear 54 meshing with the pair of pinion gears 94 and 96. This prevents the side gear 52 and the side gear 54 from hitting on the differential case 44 at the same time, so that the negative acceleration is reduced that acts on the side gears 52 and 54 and on the drive shafts 321 and 32r displaced together therewith when the side gears 52 and 54 collide with the differential case 44, as a result of which the magnitude of the inertial force Fs1 acting on the drive shafts 321 and 32r is advantageously reduced upon the collision, thereby properly preventing the drive shafts 321 and 32r from being disengaged from the side gears 52 and 54.

Seventh Embodiment

Referring to Figs. 20 to 22, a differential gear (a vehicle differential gear) 98 of this embodiment is substantially similar in configuration to the differential gear 30 of the first embodiment but differs therefrom in that it is provided with a pair of side gears 88 and 90 of the fifth embodiment whose outer circumferential teeth 88a and 90a each have an odd number of teeth in lieu of the pair of side gears 52 and 54 of the first embodiment and in that it is provided with a pair of pinion gears 94 and 96 of the sixth embodiment whose outer circumferential teeth 94a and 96a each have an odd number of teeth in lieu of the pair of pinion gears 56 and 58 of the first embodiment.

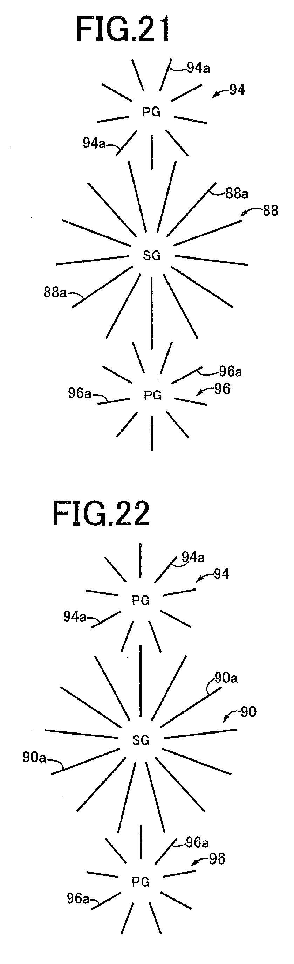

As can be seen from Figs. 21 and 22, when the differential gear 98 is in differential rotation, there occurs a phase difference between the upper backlash variation and the lower backlash variation of the side gears 88 and 90 with an odd number of teeth meshing with the pair of pinion gears 94 and 96 with an odd number of teeth. Concurrently, a phase difference occurs between the upper backlash variation of the side gear 88 and the upper backlash variation of the side gear 90 and a phase difference occurs between the upper backlash variation of the side gear 88 and the lower backlash variation.

As a result, when the differential gear 98 is in differential rotation, the pair of side gears 88 and 90 reciprocate in the same direction similarly to the sixth embodiment and the axis C4 of the side gears 88 and 90 is tilted with respect to the first rotation axis C3 of the differential case 44 similarly to the fifth embodiment so that the upper side or the lower side of one of the side gears 88 and 90, only the upper side of the side gear 88 in Fig. 20 of this embodiment collides with the differential case 44. This allows the effects of the differential gear 86 of the fifth embodiment and of the differential gear 92 of the sixth embodiment to be obtained at one time.

Although the embodiments of the present invention have been described hereinabove referring to the drawings, the present invention is applicable in the other modes.

For example, in the differential gear 30 of the embodiment, although the differential gear 30 is used as a rear wheel differential gear, it may be applied to a front wheel differential gear.

Although, in the differential gear 30 of the embodiment, the pair of belleville springs 64 and 66, the pair of belleville springs 74 and 76, the pair of belleville springs 78 and 80, and the pair of belleville springs 82 and 84 have the resilient characteristics as depicted in Figs. 3 and 7 to 9, respectively, the resilient characteristics of the pair of belleville springs of the embodiment are not limited to the resilient characteristics depicted in Figs. 3 and 7 to 9. More specifically, as long as they prevent the pair of side gears 52 and 54 from simultaneously colliding with the differential case 44 during the differential rotation of the differential gear 30, that is, as long as the resilient characteristics of the pair of belleville springs differ from each other, the pair of belleville springs may have any resilient characteristics if they lie within a range allowing the occurrence of a phase difference in the reciprocation of the side gears 52 and 54 that contributes to the prevention of the disengagement of the drive shafts 32l and 32r.

Although not individually exemplified, the present invention may be carried out in variously modified or improved modes based on the knowledge of those skilled in the art.

NOMENCLATURE OF ELEMENTS

14: engine (drive source)
30: rear-wheel differential gear (differential gear)
32l, 32r: a pair of rear-wheel axles (a pair of drive shafts)
38: housing
40, 42: a pair of bearings (supporting devices)
44: differential case
44c: inner wall surface
52, 54: a pair of side gears
52d, 54d: back surfaces
56, 58: a pair of pinion gears
62: snap ring (retaining ring)
64, 66: a pair of belleville springs (a pair of resilient members)
64a, 66a: effective operating ranges
74, 76: a pair of belleville springs (a pair of resilient members)
74a, 76a: effective operating ranges
78, 80: a pair of belleville springs (a pair of resilient members)
78a, 80a: effective operating ranges
82, 84: a pair of belleville springs (a pair of resilient members)
88, 90: a pair of side gears
88a, 90a: outer circumferential teeth
94, 96: a pair of pinion gears
94a, 96a: outer circumferential teeth

C4: axis of the side gears 52 and 54

**Claims**

1. A vehicle differential gear comprising a differential case supported rotatably around a predetermined first rotation axis via a support device within a housing so that the differential case is rotationally driven by a drive torque input from a drive source; a pair of side gears meshing with a pair of pinion gears housed in the differential case; a pair of drive shafts fitted into the pair of side gears respectively, such that the drive shafts cannot rotate relative to the side gears and such that the drive shafts are displaceable along an axis of the side gears; a retaining ring attached for preventing the drive shafts from disengaging from the side gears; and a pair of resilient members each arranged in a preloaded state between a back surface of each of the side gears and an inner wall surface of the differential case, the side gears being urged toward the pinion gears by biasing forces of the pair of resilient members, wherein the pair of resilient members have mutually different resilient characteristics.

2. The vehicle differential gear of claim 1, wherein the resilient characteristics of the pair of resilient members are such that effective operating ranges partly overlap along an axis of abscissas in a diagram having an axis of ordinates that represents magnitude of forces urging the side gears and the axis of abscissas that represents magnitude of input torques input from the drive source to the differential case.

3. The vehicle differential gear of claim 1, wherein the resilient characteristics of the pair of resilient members are such that effective operating ranges do not overlap along an axis of abscissas in a diagram having an axis of ordinates that represents magnitude of forces urging the side gears and the axis of abscissas that represents magnitude of input torques input from the drive source to the differential case.

4. The vehicle differential gear of any one of claims 1 to 3, wherein number of teeth of outer circumferential teeth of the pair of side gears is an odd number.

5. The vehicle differential gear of any one of claims 1 to 4, wherein number of teeth of outer circumferential teeth of the pair of pinion gears is an odd number.

# FIG.1

# FIG.2

# FIG.3

LOAD

RING GEAR TORQUE

## FIG.4

## FIG. 5

# FIG.6

# FIG.7

# FIG.8

LOAD

RING GEAR TORQUE

# FIG.9

LOAD

DEFLECTION

## FIG.10

## FIG.11

# FIG.12

P2G1      P2G1      P2G1      P2G1

BACKLASH VARIATION

P1G2      P1G2      P1G2      P1G2

D1

MESHING PHASE

# FIG.13

68

P1G2                                         P1G2

P2G1                                  E1              P2G1

# FIG.14

# FIG.15

# FIG.16

# FIG.17

# FIG.18

# FIG.19

# FIG.20

# FIG.21

# FIG.22

| | INTERNATIONAL SEARCH REPORT | International application No. |
|---|---|---|
| | | PCT/JP2011/075512 |

A. CLASSIFICATION OF SUBJECT MATTER
*F16H48/08*(2006.01)i

According to International Patent Classification (IPC) or to both national classification and IPC

B. FIELDS SEARCHED

Minimum documentation searched (classification system followed by classification symbols)
F16H48/08

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-38546 A (GKN Driveline Japan Ltd.), 24 February 2011 (24.02.2011), entire text; all drawings (Family: none) | 1-5 |
| A | JP 2006-132675 A (Toyota Motor Corp.), 25 May 2006 (25.05.2006), entire text; all drawings & US 2006/98909 A1 & DE 102005052735 A1 | 1-5 |
| A | JP 10-246308 A (Tochigi Fuji Sangyo Kabushiki Kaisha), 14 September 1998 (14.09.1998), entire text; all drawings (Family: none) | 1-5 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 November, 2011 (16.11.11) | 29 November, 2011 (29.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/075512 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2004-263862 A  (Tochigi Fuji Sangyo Kabushiki Kaisha), 24 September 2004 (24.09.2004), entire text; all drawings (Family: none) | 1-5 |
| A | Microfilm of the specification and drawings annexed to the request of Japanese Utility Model Application No. 61909/1982 (Laid-open No. 165359/1983) (Isuzu Motors Ltd.), 04 November 1983 (04.11.1983), entire text; all drawings (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8049758 A
- JP 51133925 A
- JP 51111631 A
- JP 2003130181 A